# EUROPÄISCHE PATENTSCHRIFT

(11) **EP 0 855 635 B1**
(45) Veröffentlichungstag und Bekanntmachung des Hinweises auf die Patenterteilung: **28.09.2005**
(21) Anmeldenummer: 98100128.2
(22) Anmeldetag: 07.01.1998
(51) Int. Cl.: G05D 23/13, E03C 1/042

(54) **Sanitärarmatur**
Sanitary fittings
Robinetterie sanitaire

(30) Priorität: 22.01.1997 DE 19702038
(43) Veröffentlichungstag der Anmeldung: 29.07.1998
(73) Patentinhaber: Hansgrohe AG, 77761 Schiltach (DE)
(72) Erfinder: Lorch, Werner, 78713 Schramberg (DE)
(74) Vertreter: Patentanwälte Ruff, Wilhelm, Beier, Dauster & Partner

(56) Entgegenhaltungen:
- EP-A- 0 504 427
- WO-A-91/08532
- DE-A- 2 709 446
- FR-A- 857 386
- FR-A- 2 250 934
- FR-A- 2 605 030

## Beschreibung

Die Erfindung geht aus von einer Sanitärarmatur, die ein Thermostatventil und ein Absperrventil enthält. Mit dem Absperrventil kann die Menge des die Armatur verlassenden Wassers eingestellt und geändert werden, während das Thermostatventil zum Einstellen der Temperatur dient.

Es ist bereits eine sanitäre Mischbatterie bekannt (WO 91/08532), die vor dem Thermostatventil je ein Absperrventil für kaltes Wasser und ein Absperrventil für warmes Wasser aufweist. Die beiden Absperrventile, die auch zur Mengenregulierung dienen, werden mit Hilfe eines einzigen Bedienelements betätigt. Hierzu ist eine Rutschkupplung vorhanden.

Ebenfalls bekannt ist eine Sanitärarmatur (EP 246405), bei der ein Ventil zur Regulierung der Menge stromab des Mischventils angeordnet ist.

Ebenfalls bekannt ist ein Thermostatventil mit Mengeneinstellung (DE 2804755 A1), bei dem das Thermostatventil und das Mengenregulierventil zu einer Baueinheit zusammengefaßt sind.

Weiterhin bekannt ist ein thermostatisches Mischventil (FR 857386), bei dem der Auslass aus einem Kaltwasser führenden Teil und aus einem Warmwasser führenden Teil durch ein gemeinsames Gestänge gesteuert wird.

Ebenfalls bekannt ist eine Anordnung zur Halterung einer Dusche (FR-A1-2605030). Hier ist in einem Unterputzgehäuse eine Halterung für den Griff einer Handbrause angeordnet. Dieses Unterputzgehäuse kann an unterschiedliche Wandstärken angepasst werden. Es handelt sich allerdings nicht um das Gehäuse einer ein Thermostatventil und ein Absperrventil enthaltenden Sanitärarmatur. Die Wasserzufuhr zu der Dusche wird über ein Warmwasserventil und ein getrenntes Kaltwasserventil gesteuert.

Ein weiteres Thermostatventil ist aus FR-2250934-A1 bekannt.

Weiterhin ist eine Auslaufarmaturanordnung bekannt (DE 2709446-A1), bei der die Bedienelemente der Armatur über Schläuche mit dem Gehäuse verbunden sind.

Ebenfalls bekannt ist eine Sanitärarmatur (EP 5044271, Figur 100 bis 104), bei der ein Kaltwassereinlassventil, ein Warmwassereinlassventil und ein Thermostatventil als getrennte Elemente in je einer Plattenöffnung befestigt werden können. Unterhalb der Platte sind die einzelnen Gehäuse durch getrennte Leitungen nachträglich miteinander verbunden.

Der Erfindung liegt die Aufgabe zugrunde, ein einfach und platzsparend aufgebautes Ventil zu schaffen, das sich insbesondere für eine Anbringung im Bereich einer Badewanne eignet.

Zur Lösung dieser Aufgabe schlägt die Erfindung eine sanitäre Armatur mit den im Anspruch 1 genannten Merkmalen vor. Weiterbildungen der Erfindung sind Gegenstand von Unteransprüchen.

Bei der von der Erfindung vorgeschlagenen Armatur ist das Absperrventil, das ebenfalls zur Mengenregulierung dient, vor dem Thermostatventil angeordnet. Der Ventileinsatz ist so ausgebildet, daß sowohl eine Absperrung des kalten Wassers als auch eine Absperrung des Warmwassers erfolgen kann. Dadurch kann die Anbringung von Rückflußverhinderern vermieden werden, da eine Querströmung nicht erfolgen kann. Dies macht den Aufbau des Ventils einfach, insbesondere dann, wenn keine Möglichkeit zur Wartung von Rückflußverhinderern vorhanden ist.

Erfindungsgemäß kann die Armatur einen Auslauf aufweisen, der mit dem Mischwasserausgang des Gehäuses für das Thermostatventil verbunden bzw. verbindbar ist und einen schwenkbaren Auslauf aufweist. Vorzugsweise kann auch dieser Auslauf in einem Innenraum eines Gehäuses gelagert sein.

Erfindungsgemäß kann der Auslauf einen Brauseumsteller aufweisen, der in dem Auslaufgehäuse angeordnet ist, wobei das Auslaufgehäuse einen Ausgangsanschluß zum Anbringen eines Schlauches oder einer zu dem Brauseschlauch führenden Leitung aufweist.

In nochmaliger Weiterbildung kann die Armatur eine Halterung für eine Handbrause aufweisen, die ein Gehäuse mit einer Durchführung für den Brauseschlauch aufweist. Diese Halterung ist mit Vorteil ein getrenntes Bauteil.

Die Erfindung schlägt vor, daß die Gehäuse zur Unterputzmontage ausgebildet sind, nämlich zu einer Montage hinter oder unter einem Plattenelement, das Öffnungen aufweist, durch die hindurch eine Betätigung der Ventile erfolgen kann. Ein Beispiel für ein derartiges Plattenelement ist der Rand einer Badewanne.

Eine Möglichkeit der Montage an solchen plattenförmigen Elementen besteht darin, daß das Gehäuse an dem Rand dieser Öffnung festgelegt wird, so daß die Öffnung gleichzeitig auch als Befestigungsöffnung dient.

Insbesondere schlägt die Erfindung in Weiterbildung vor, daß der Ventileinsatz und/oder der Thermostat und/oder die Schwenkhalterung für den Auslauf und/oder der Brauseumsteller aus dem Innenraum des jeweiligen Gehäuses zur Vorderseite der Armatur herausnehmbar sind, auch bei montierter Armatur. Diese Möglichkeit ist bei einer Unterputzmontage von großer Wichtigkeit, wenn eine Zugriffsmöglichkeit auf die Rückseite des plattenartigen Elements nicht gegeben ist oder ein solcher Zugriff nur schwer möglich ist. Es wird auf diese Weise möglich, die Armatur bei Herstellung eines Badezimmers einmal richtig zu montieren, wobei dann Wartungsarbeiten später von der dann noch zugänglichen Vorderseite her erfolgen können.

Insbesondere ist in Weiterbildung der Erfindung vorgesehen, daß das Gehäuse bzw. alle Gehäuse einen Ausgleich für unterschiedliche Wandstärken aufweisen. Dieser Ausgleich ist mit Vorteil so ausgebildet, daß er von der sichtbaren Vorderseite her nicht erkennbar zu sein braucht.

Die Befestigung ist so angeordnet, daß das Gehäuse ein von der Vorderseite bzw. Oberseite her mit ihm verbindbares Gegenelement aufweist, zwischen dem und dem Gehäuse der Rand der Befestigungsöffnung festgelelemmt wird. Die Verbindung kann beispielsweise durch Schrauben hergestellt werden. Der Begriff Vorderseite und Oberseite wird im folgenden mit gleicher Bedeutung verwendet. Bei der Montage an einer senkrechten Wand ist die Vorderseite die zugängliche Seite, während bei einer Montage an einer horizontalen Platte, beispielsweise dem Rand einer Badewanne, die Oberseite die zugängliche Seite ist.

Das erwähnte Gegenelement kann beispielsweise hülsenartig ausgebildet sein, so daß es durch die Befestigungsöffnung hindurch in das Gehäuse bzw. dessen Innenraum hineingreift und dort festlegbar ist. Eine Befestigungsmöglichkeit ist das Einschrauben mit einem Außengewinde der Hülse in ein Innengewinde des Innenraums.

Eine weitere ebenfalls vorgeschlagene Befestigungsmöglichkeit besteht darin, daß das Gegenelement im wesentlichen ringartig ausgebildet ist, damit an der Vorderseite der Platte anliegt und mit Schrauben an dem Gehäuse auf der Rückseite der Platte festgeschraubt wird.

Damit die von der Erfindung vorgeschlagene Armatur platzsparend an dem Rand einer Badewanne angebracht werden kann, kann erfindungsgemäß in Weiterbildung vorgesehen werden, daß die Einlaßanschlüsse und die Ausgänge des Absperrgehäuses im wesentlichen in der gleichen Ebene liegen. Damit kann das Gehäuse dann so am Rand einer Badewanne montiert werden, daß diese Ebene parallel zu der Außenseite der Wanne verläuft. Zwischen den einzelnen Anschlüssen kann auch eine gewisse Versetzung vorhanden sein, sofern die Versetzung nicht größer ist als der zur Verfügung stehende Raum, der durch die Außenabmessungen des Gehäuses mit bestimmt wird.

Insbesondere kann vorgesehen sein, daß die Mittelachse der Befestigungsöffnung ebenfalls im wesentlichen in der Ebene der Anschlüsse liegt.

Auch bei dem Gehäuse für das Thermostatventil kann vorgesehen sein, daß die Eingänge und der Ausgang im wesentlichen in der gleichen Ebene liegen. Auch hier kann die Mittelachse der Befestigungsöffnung im wesentlichen in der Ebene der Anschlüsse liegen.

Auch bei dem Gehäuse für den Auslauf kann erfindungsgemäß vorgesehen sein, daß der Eingang in das Gehäuse und der Anschluß für den Brauseschlauch im wesentlichen in der gleichen Ebene liegen, in der vorzugsweise auch die Mittelachse der Befestigungsöffnung liegt.

Die Ebenen bei jedem Gehäuse, in denen die Anschlüsse liegen, brauchen nicht untereinander identisch zu sein, da es möglich ist, die verschiedenen Gehäuse an unterschiedlichen Stellen anzubringen. Für eine Anbringung an etwa der gleichen Stelle schlägt die Erfindung vor, daß mindestens zwei Gehäuse derart miteinander verbunden sind bzw. werden, daß die Ebenen der Anschlüsse im wesentlichen zusammenfallen. Beispielsweise können die Gehäuse für die Mengenregulierung, für das Thermostatventil und für den Auslauf in einer Linie an einer Seite einer Badewanne angeordnet werden. In diesem Fall liegen die Befestigungsöffnungen praktisch auf einer Linie.

Es ist jedoch auch möglich, beispielsweise nur die beiden Ventilgehäuse in einer Ebene anzuordnen und den Auslauf an einer anderen Stelle, beispielsweise auch an einer anderen Seite einer Badewanne.

Insbesondere schlägt die Erfindung vor, daß das Gehäuse für das Absperrventil und das Gehäuse für das Thermostatventil Teile eines gemeinzamen Gehäuses sind, wobei die Verbindung zwischen beiden Ventilen durch eingeformte Kanäle verwirklicht werden kann.

Zur Verbindung zwischen dem Gehäuse für das Thermostatventil und dem Gehäuse für den Auslauf schlägt die Erfindung vor, daß hier ein Rohr, eine Leitung oder auch ein Schlauch verwendet wird.

Weitere Merkmale, Einzelheiten und Vorzüge der Erfindung ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: einen Schnitt durch eine Sanitärarmatur mit einem Absperrventil und einem Thermostatventil;
- Fig. 2: einen Längsschnitt durch einem schwenkbaren Auslauf;
- Fig. 3: einen Längsschnitt durch eine Halterung für einen Brauseschlauch.

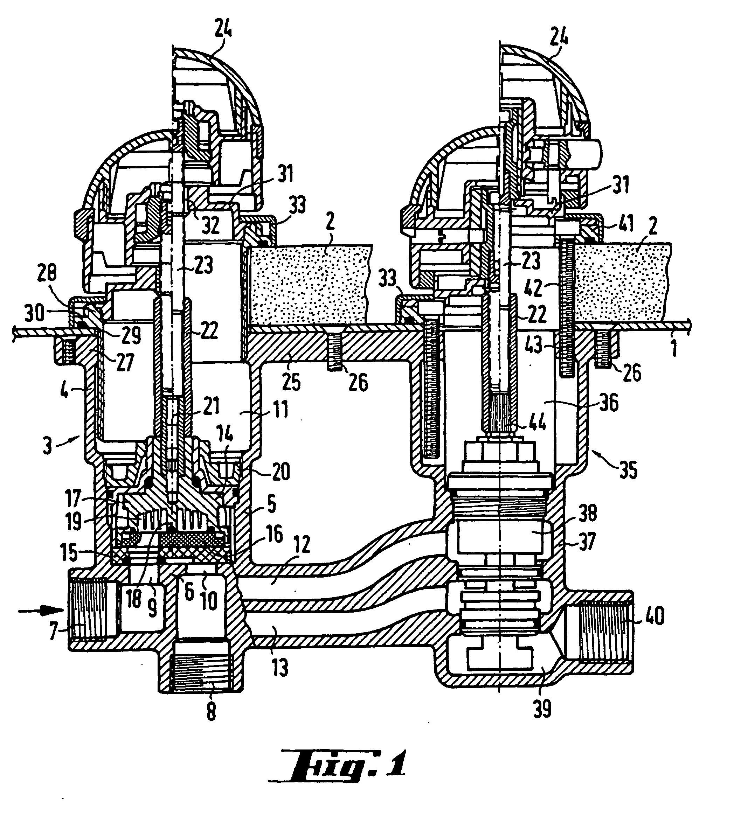

Der in Figur 1 dargestellte Schnitt ist durch den horizontal verlaufenden Rand einer Badewanne 1 hindurch gelegt. Dieser Badewannenrand soll als Beispiel für ein plattenförmiges Element dienen, das nicht nur horizontal, sondern auch vertikal verlaufen kann. Aus später noch zu erläuternden Gründen ist auf dem Badewannenrand 1 ein dickeres Element 2 dargestellt, bei dem es sich beispielsweise um eine Fliesenbank handeln kann.

Die in Figur 1 dargestellte Armatur enthält, links beginnend, ein Gehäuse 3 für ein Absperrventil. Das Gehäuseteil weist etwa Zylinderform auf mit einem ersten Abschnitt 4, der dem Badewannenrand 1 zugewandt ist, und einem zweiten im Durchmesser verringerten Abschnitt 5, der durch einen Boden 6 abgeschlossen ist. Im Bereich seiner dem Badewannenrand 1 abgewandten Seite enthält das Gehäuseteil einen Anschluß 7 für Warmwasser und einen Anschluß 8 für kaltes Wasser. Beide Anschlüsse 7, 8 sind durch Durchbrüche 9, 10 mit dem Innenraum 11 des Gehäuses 3 verbunden. An dem gleichen Ende des Gehäuses 3 führt ein Auslaß 12 für Warmwasser und ein Auslaß 13 für kaltes Wasser aus dem Gehäuse 3 heraus. Beide Auslässe 12, 13 sind als Kanäle des Gehäuses ausgebildet.

In den Innenraum 11 des Gehäuses 3 ist in dessen Bereich 5 mit verkleinertem Durchmesser ein Ventileinsatz 14 eingesetzt. Dieser Ventileinsatz 14 liegt mit einer feststehenden Steuerscheibe 15 auf dem Boden 6 auf. Gegenüber der feststehenden Steuerscheibe 15 ist eine bewegbare Steuerscheibe 16 verdrehbar angeordnet, die mit einem Haubenelement 17 drehfest verbunden ist. Das Haubenelement 17 enthält eine durch eine Trennwand 18 unterteilte Ausnehmung 19. Durch das Zusammenwirken der feststehenden Steuerscheibe 15, der bewegbaren Steuerscheibe 16 und des Haubenelements 17, das verdreht werden kann, werden zwei getrennte absperrbare Wasserführungen für das Warmwasser und für das Kaltwasser gebildet.

Der Ventileinsatz ist in den Innenraum 11 des Gehäuses 3 eingeschraubt, und zur Außenseite hin durch einen Abschlußdeckel 20 abgeschlossen.

Durch den Abschlußdeckel ragt eine Drehspindel 21 hindurch, die über eine innen verzahnte Hülse 22 mit einer verschiebbaren Welle 23 in Dreheingriff steht. An der Welle 23 ist ein Betätigungsgriff 24 festgelegt, beispielsweise aufgeschraubt. Mit Hilfe des Griffes 24 kann die Drehspindel 21 verdreht und damit das Absperrventil geöffnet und geschlossen werden.

Das Gehäuse 3 ist an einer metallischen Platte 25 angeformt, die an der Unterseite des Wannenrands 1 mit Hilfe von Schrauben 26 festgeschraubt ist.

Der zylindrische Innenraum 11 des Gehäuses 3 weist im Bereich seines dem Wannenrand 1 zugewandten Endes eine nach innen gerichtete Schulter 27 mit einem Innengewinde auf. In dieses Innengewinde ist eine Hülse 28 eingeschraubt, die eine etwa dem Durchmesser der Befestigungsöffnung 29 entsprechende axiale Länge aufweist. Die Hülse 28 weist im Bereich ihres äußeren Endes einen nach außen gerichteten Flansch 30 auf, mit dem sie an der Oberseite des Badewannenrands 1 anliegt. Auf der rechten Seite der Drehspindel 21 ist eine Situation dargestellt, in der auf dem Badewannenrand 1 noch eine Fliesenbank 2 vorhanden ist. In diesem Fall liegt die Schulter 30 auf der Oberseite der Fliesenbank 2 auf. Dieser Ausgleich unterschiedlicher Dicken wird durch die axiale Länge des vorderen Bereich 4 des Innenraums 11 und die axiale Länge der Hülse 28 möglich gemacht.

In den vorderen Bereich der Hülse 28 ist eine Scheibe 31 eingeschraubt, die in ihrem mittleren Bereich eine Lagerung 32 für die Welle 23 bildet. Aufgrund des axial verschiebbaren Eingriffs der Welle 23 in die Innenverzahnung der Hülse 22 kann auch die Betätigung für das Absperrventil den Ausgleich der Wanddicken mitmachen.

Die Außenseite des Flansches 30 weist ein Gewinde auf, auf das eine Abdeckrosette 33 aufgeschraubt ist. Diese bildet, abgesehen von dem Griff 24, den äußeren Abschluß des Ventils außerhalb des Badewannenrands 1. Der Dickenausgleich ist daher von der Vorderseite bzw. Oberseite nicht sichtbar.

Der Innendurchmesser der Hülse 28 ist größer als der Außendurchmesser des Abschlußdeckels 20 des Ventileinsatzes, so daß der gesamte Ventileinsatz 14 durch die Hülse 28 hindurch herausgenommen oder eingesteckt werden kann. Zum Auswechseln des Ventilseinsatzes ist es nur erforderlich, den Griff 24 abzunehmen, die Rosette 33 abzuschrauben und anschließend die Scheibe 31 herauszuschrauben. Dabei bleibt die Hülse 28 weiterhin in das Gehäuse 3 eingeschraubt und damit das Gehäuse 3 an dem Wannenrand 1 festgelegt.

Die Auslässe 12, 13 für Warmwasser und kaltes Wasser münden als Eingänge in das Gehäuse 35, das in Figur 1 rechts dargestellt ist. Das Gehäuse 35 weist wiederum einen Innenraum 36 auf, der in seinem dem Badewannenrand 1 zugewandten Bereich einen größeren Innendurchmesser aufweist. In dem dem Badewannenrand 1 abgewandten Bereich 37 ist ein Thermostat 38 eingesetzt, bei dem es sich um einen üblichen Thermostaten handelt. Er wirkt mit nach innen gerichteten Schultern des Gehäuses 35 zur Bildung mehrerer Räume zusammen. Auf seiner in Fig. 1 unteren Seite strömt aus ihm das Mischwasser in einen Mischwasserraum 39 aus, der mit einem seitlich angesetzten Mischwasserausgang 40 verbunden ist.

Der maximale Durchmesser des Thermostaten 38 ist kleiner als der Innendurchmesser des Innenraums 36 des Gehäuses 35 in seinem äußeren Bereich und ebenfalls kleiner als der Durchmesser der Befestigungsöffnung. Daher kann bei abgenommenem Griff 24 der Thermostat 38 ebenfalls aus dem Gehäuse 35 entnommen und in das Gehäuse eingesetzt werden.

Zur Befestigung des Gehäuses 35 für den Thermostat 38 ist an der Oberseite des Badewannenrands 1 ein Ringelement 41 vorgesehen, das praktisch den Flansch 30 bei der Hülse 28 ersetzt. Dieses Ringelement 41 liegt an der Außenseite auf und weist mindestens zwei Öffnungen für je eine Schraube 42 auf. Die Schrauben 42 greifen durch die Befestigungsöffnung oder an dieser vorbei durch den Rand 1 der Badewanne hindurch und in Gewindeöffnungen 43 des Gehäuses 35 ein. Die Gewindeöffnungen 43 sind in einem Bereich angeordnet, der etwa so dick ist wie die Platte 25. Hinter dem Gewindeöffnungen 43 ist ausreichend viel Platz in Längsrichtung der Schrauben 42, so daß die Schrauben 42 auch sehr weit in das Gehäuse 35 hinein eingeschraubt werden können. Auch dies dient zum Ausgleich unterschiedlich großer Wanddicken. Die Einstellung des Thermostaten 28 erfolgt ebenfalls mit Hilfe einer Drehspindel 44, die mit Hilfe einer Verlängerungshülse 22 mit einer Welle 23 verbunden ist, an der der Griff 24 drehfest angebracht ist. Zum Austauschen des Thermostaten wird ebenfalls der Griff 24 abgenommen, die Rosette 33 abgeschraubt und die Scheibe 31 aufgeschraubt. Anschließend kann der Thermostat 38 aus dem Gehäuse 35 herausgeschraubt und entnommen werden.

Der Anschluß 7 für das Warmwasser und der Anschluß 8 für das kalte Wasser liegen in einer Ebene, in der auch die Drehachse der Welle 23 liegt. Die Drehachse 23 durchsetzt die Befestigungsöffnung 29 in deren Mittelachse. Die Auslässe 12, 13 für das das Absperrventil verlassende Wasser sind leicht gegenüber dieser Ebene versetzt, während sie in dem Gehäuse 35 für den Thermostaten 38 wieder in der Längsmittelebene einmünden. Auch der Anschluß 40, aus dem das Mischwasser austritt, liegt in dieser Ebene. Dadurch baut die gesamte in Figur 1 dargestellte Einheit in einer Richtung senkrecht zur Zeichnungsebene sehr flach. Sie kann daher an einer Badewanneseite angebracht werden, wenn diese Badewanne einen nur schmalen Rand 1 aufweist.

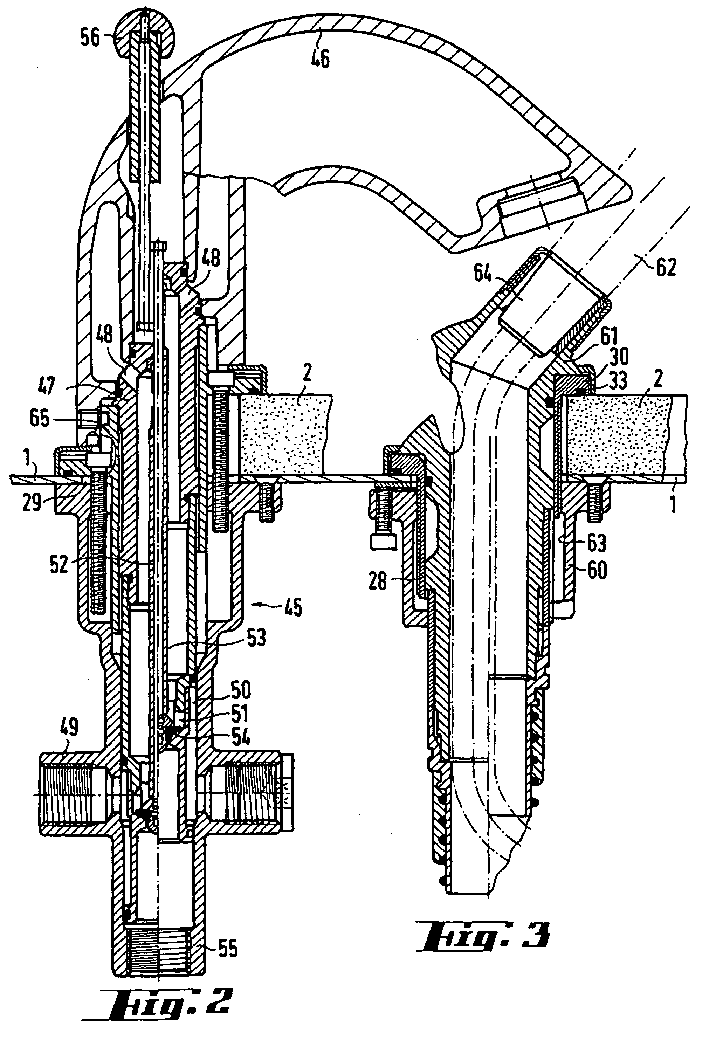

Fig. 2 zeigt einen Schnitt durch einen Auslauf, der ebenfalls in einer Befestigungsöffnung 29 des Badewannenrands 1 angebracht ist. Auch hier ist ein unterhalb des Badewannenrands 1 angebrachtes Gehäuse 45 vorhanden, das in praktisch der gleichen Weise wie das Gehäuse 35 des Thermostat 38 an dem Badewannenrand 1 festgelegt wird. In dem Gehäuse ist eine Muffe 65 festgelegt, der gegenüber ein Auslauf 46 verschwenkbar ist. Die Verschwenkung des Auslauf 46 geschieht um die Mittelachse des Gehäuses, also um eine Linie, die durch den Mittelpunkt der Befestigungsöffnung 29 hindurchgeht und senkrecht auf der Fläche dieser Öffnung 29 steht.

Die Muffe 65 greift je nach Dicke der Fliesenbank 2 mehr oder weniger tief in das Gehäuse 45 ein. Innerhalb der Muffe 65 ist eine weitere zylindrische Muffe 47 angeordnet, durch die das Wasser durch eine schräg verlaufende Bohrung 48 in den Auslauf 46 gelangen kann.

Das Gehäuse 45 für den Auslauf 46 enthält einen Eingangsanschluß 49, der mit Hilfe eines Rohres, einer Leitung oder eines Schlauches mit dem Ausgangsanschluß 40 des Gehäuses 35 für den Thermostat 38 verbunden wird. Aus dem Anschluß 49 gelangt das Wasser in einen Ringraum 50, von dort durch eine Querbohrung 51 in das Innere der erwähnten Muffe 47 und von dort in den Auslauf 46.

Der Ringraum 50 wird durch eine Durchmesserverringerung der zweiteiligen Muffe 47 gebildet. Die Muffe 47 setzt sich nach unten in ein Rohr fort, das mit der Muffe 47 verbunden ist. Das Rohr weist an seinem unteren Ende einen Bereich verringerten Durchmessers auf, so daß ein Ringraum 50 gebildet ist. Der Ringraum 50 wird im Bereich seiner beiden axialen Enden durch eine Schulter und außerhalb der Schulter durch eine Dichtung begrenzt. Die axiale Länge dieses Ringraums entspricht der Summe aus dem Verstellbereich für den Putzdickenausgleich und dem Durchmesser der Eingangsöffnung.

Längs der Mittelachse 52 des Gehäuses ist ein Rohr 53 verschiebbar, das im Bereich seines unteren Endes eine Dichtung 54 aufweist. Je nach Stellung des Rohres 53 liegt die Dichtung 54 entweder am unteren Rand der Querbohrung 51 oder an deren oberem Rand an. Wenn die Dichtung 54 am oberen Rand der Querbohrung 51 anliegt, gelangt das Wasser durch die Querbohrung 51 in Fig. 2 nach unten und in den Anschluß 55 für einen Brauseschlauch. Zur Betätigung der Verschiebung des Rohres 53 ist ein Griff 26 vorgesehen, der durch den oberen Rand des Auslaufs 46 hindurchgreift. Der Griff 26 bildet zusammen mit dem Rohr 53 und der Dichtung 54 einen Brauseumsteller.

Auch bei dem Gehäuse 45 für den Auslauf 46 liegt der Anschluß 49 für das Mischwasser und der Anschluß 55 für den Brauseschlauch in einer Ebene, in der auch die Mittelachse 52 des Gehäuses 45 liegt.

Das Gehäuse 45 für den Auslauf 46 kann in unmittelbarer geradliniger Verlängerung der beiden erstgenannten Gehäuse 3, 35 angeordnet werden. Dann bildet die Armatur eine Dreilocharmatur. Es ist aber ebenfalls möglich, den Auslauf an einer anderen Stelle anzuordnen und für die Verbindung zwischen dem Ausgang 40 und dem Anschluß 49 einen Schlauch zu verwenden.

Fig. 3 zeigt nun ebenfalls in einem Schnitt durch den Wannenrand 1 bzw. die Fliesenbank 2 ein Gehäuse 60 für die Halterung 61 eines Brausegriffs 62, der nur schematisch dargestellt ist. Das Gehäuse 60 ist ähnlich aufgebaut wie das Gehäuse 3. An der Innenseite seines Innenraums 63 ist ein Gewinde angeordnet, in das eine mit einem Außengewinde versehene Hülse 28 eingeschraubt ist. Diese Hülse weist im Bereich ihres äußeren Endes eine nach außen gerichtete Schulter 30 auf, auf die eine Abdeckrosette 33 aufgeschraubt ist.

In dem Inneren der Hülse 28 ist die Halterung 61 eingesetzt, die in ihrem Randbereich von der Rosette 33 festgehalten wird. Die Halterung 61 weist eine leicht schräg verlaufende Öffnung auf, in der ein Griffstück 64 eines Brausegriffs 62 festgelegt werden kann, beispielsweise mit einer gewissen Klemmung.

Die Halterung 61 kann nach Lösen der Rosette 33 abgenommen werden, ohne daß die Hülse 28 von dem Gehäuse 60 gelöst zu werden braucht. Nach Herausziehen der Halterung 61 für den Brausegriff 62 kann auch der an der Halterung auf deren Innenseite angebrachte Brauseschlauch herausgezogen werden.

Die Erfindung schlägt vor, die Verbindung zwischen dem Gegenelement und dem Gehäuse so auszugestalten, daß das Gegenelement in einer bestimmten Drehausrichtung gegenüber dem Gehäuse positioniert werden kann. Dies ist in der Figur 1 bei dem rechten Gehäuse 35 dargestellt, da durch die Verwendung der Schrauben 42 eine ausgerichtete Positionierung des Ringelements erreicht wird. Daher kann ein Anschlag bei dem Thermostaten an dem Ringelement selbst ausgebildet sein.

## Patentansprüche

1. Sanitärarmatur zur Montage hinter einem mindestens eine Befestigungsöffnung (29) aufweisenden Plattenelement, mit einem Gehäuse (3) für ein Absperrventil, das einen Innenraum (11), einen Einlassanschluss (7) für Warmwasser, einen Einlassanschluss (8) für Kaltwasser, einen Ausgang (12) für Warmwasser und einen Ausgang (13) für Kaltwasser aufweist, einem getrennten Gehäuse (35) für ein Thermostatventil, das einen Innenraum (36), einen mit dem Ausgang (12) für Warmwasser verbundenen Eingang für warmes Wasser, einen mit dem Ausgang (13) für kaltes Wasser verbundenen Eingang für kaltes Wasser und einen Ausgang (40) für Mischwasser aufweist, sowie mit einem Thermostaten (38), der in den Innenraum (36) des Gehäuses (35) einsetzbar ist, **gekennzeichnet durch** einen Ventileinsatz (14), der in den Innenraum (11) des Gehäuses (3) für das Absperrventil einsetzbar ist, ein Betätigungselement (21) aufweist und das kalte und warme Wasser absperrt, wobei zur Bildung eines Ausgleichs für unterschiedliche Wandstärken des Plattenelements jedes Gehäuse (3, 35, 45, 60) ein von der Vorderseite mit ihm verbindbares Gegenelement (28) aufweist, zwischen dem und dem Gehäuse der Rand der Befestigungsöffnung (29) festgeklemmt wird und der Innnendurchmesser des jeweiligen Gegenelements größer als der Außendurchmesser des Ventileinsatzes (14) bzw. des Thermostaten (38) ist, sodass diese auch bei montierter Armatur aus dem Innenraum (11, 36) des jeweiligen Gehäuses (3, 35) herausnehmbar sind.

2. Armatur nach Anspruch 1, mit einem Auslauf (46), der
2.1 mit dem Mischwasserausgang (40) des Thermostatventils verbindbar ist,
2.2 ein Gehäuse (45) mit einem Innenraum aufweist, in dem
2.2.1 der Auslauf (46) schwenkbar gelagert ist.

3. Armatur nach Anspruch 2, bei der das Auslaufgehäuse einen Brauseumsteller und einen Ausgangsanschluß (55) für einen Brauseschlauch aufweist.

4. Armatur nach einem der vorhergehenden Ansprüche, mit einer Halterung (61) für eine Handbrause, die ein Gehäuse (60) mit einer Durchführung für den Brauseschlauch aufweist.

5. Armatur nach einem der vorhergehenden Ansprüche, bei der die Gehäuse (3, 35, 45, 60) zur Unterputzmontage ausgebildet sind, insbesondere zur Montage an einem Wannenrand.

6. Armatur nach einem der vorhergehenden Anspruch, bei der die Schwenkhalterung für den Auslauf (46) und/oder der Brauseumsteller aus dem Innenraum (63) des jeweiligen Gehäuses (45, 60) herausnehmbar sind, auch bei montierter Armatur.

7. Armatur nach einem der vorhergehenden Ansprüche, bei der das Gegenelement hülsenartig ausgebildet und in das Innere des Gehäuses (3, 60) einschraubbbar ist.

8. Armatur nach einem der vorhergehenden Ansprüche, bei der das Gegenelement ringartig ausgebildet ist und mit Schrauben (42) an dem Gehäuse (35, 45) anschraubbar ist.

9. Armatur nach einem der vorhergehenden Ansprüche, bei der die Einlaßanschlüsse (7, 8) und die Ausgänge (12, 13) des Absperrgehäuses (3) im wesentlichen in der gleichen Ebene liegen.

10. Armatur nach Anspruch 9, bei der die Mittelachse der Befestigungsöffnung (29) im wesentlichen in der Ebene der Anschlüsse (7, 8, 12, 13) liegt.

11. Armatur nach einem der vorhergehenden Ansprüche, bei der die Eingänge und der Ausgang (40) des Gehäuses (35) für den Thermostaten im wesentlichen in einer Ebene liegen.

12. Armatur nach Anspruch 11, bei der die Mittelachse der Befestigungsöffnung (29) im wesentlichen in der Ebene der Anschlüsse (40) liegt.

13. Armatur nach einem der vorhergehenden Ansprüche, bei der der Einlaß (49) in das Gehäuse (45) des Auslaufs (46) und dessen Brauseschlauchanschluß (55) im wesentlichen in der gleichen Ebene liegen, in der vorzugsweise auch die Mittelachse (52) der Befestigungsöffnung (29) liegt.

14. Armatur nach einem der vorhergehenden Ansprüche, bei der mindestens zwei Gehäuse (3, 45, 35, 60) derart miteinander verbunden sind bzw. verbunden werden, daß die Ebenen ihrer Anschlüsse im wesentlichen zusammenfallen.

15. Armatur nach einem der vorhergehenden Ansprüche, bei der das Gehäuse (3) für das Absperrventil und das Gehäuse (35) für das Thermostatventil Teile eines gemeinsamen Gehäuses sind und die Verbindung zwischen beiden Ventilen durch eingeformte Kanäle verwirklicht wird.

16. Armatur nach einem der vorhergehenden Ansprüche, bei der die Gehäuse (35) für das Thermostatventil und für den Auslauf (46) durch ein Rohr, einen Schlauch oder dgl. miteinander verbunden werden.

17. Armatur nach einem der vorhergehenden Ansprüche, bei der die Verbindung zwischen dem Gehäuse (35, 45, 60) und dem Gegenelement derart ausgebildet ist, daß eine drehpositionsausgerichtete Anbringung des Gegenelement möglich ist.

## Claims

1. Bathroom fitting for being mounted behind a plate element having at least one attachment opening (29) with a housing (3) for a control valve having an interior (11) an inlet connection (7) for hot water, an inlet connection (8) for cold water, and outlet (12) for hot water, and an outlet (13) for cold water, a separate housing (35) for a thermostat valve having an interior (36), an inlet for hot-water connected to the outlet (12) for hot water, an inlet for cold water connected to the outlet (13) for cold water, and an outlet (40) for mixed water, and with a thermostat (38) which can be inserted in the interior (36) of the housing (35), **characterized by** a valve insert (14) that can be inserted in the interior (11) of the housing (3) for the control valve, and having an actuating element (21) which shuts off the cold and hot water, whereby compensation for different wall thicknesses of the plate element of each housing (3, 35, 45, 60) is formed by a counter-element (28) connectable to the front of the housing, and the edge of the attachment opening (29) is clamped between the counter-element and the housing, and the inner diameter of the respective counter-element is greater than the outer diameter of the valve insert (14) or the thermostat (38) so that it is removable from the interior (11, 36) of the respective housing (3, 35) even when the fitting is mounted.

2. Fitting according to claim one with an outlet (46) which
2.1 is connectable to the mixed water outlet (40) of the thermostat valve,
2.2 has a housing (45) with an interior in which
2.2.1 the outlet (46) is pivotably mounted.

3. Fitting according to claim 2, wherein the outlet housing has a shower adjuster and an outlet connection (55) for a shower hose.

4. Fitting according to one of the prior claims with a holder (61) for a hand-held showerhead having a housing (60) with a passage for the shower hose.

5. Fitting according to one of the prior claims, wherein the housing (3, 35, 45, 60) is designed to be flush mounted, especially mounted to a tub edge.

6. Fitting according to one of the prior claims, where the pivoting holder for the outlet (46) and/or the shower adjuster are removable from the interior (63) of the respective housing (45, 60), even when the fitting is mounted.

7. Fitting according to one of the prior claims, wherein the counter-element is designed as a sleeve and can be screwed into the interior of the housing (3, 60).

8. Fitting according to one of the prior claims, wherein the counter-element is designed as a ring and can be screwed to the housing (35, 45) with screws (42).

9. Fitting according to one of the prior claims, wherein the inlet connections (7, 8) and the outlets (12, 13) of the shut-off housing (3) lie essentially in the same plane.

10. Fitting according to claim 9, wherein the mid-axis of the attachment opening (29) lies essentially in the plane of the connections (7, 8, 12, 13).

11. Fitting according to one of the prior claims, wherein the inlets and the outlet (40) of the housing (35) for the thermostat lie essentially in one plane.

12. Fitting according to claim 11, wherein the mid-axis of the attachment opening (29) lies essentially in the plane of the connections (40).

13. Fitting according to one of the prior claims, wherein the inlet (49) in the housing (45) of the outlet (46) and its shower hose connection (55) lie essentially in the same plane in which the mid-axis (52) of the attachment opening (29) preferably lies.

14. Fitting according to one of the prior claims, wherein at least two housings (3, 45, 35, 60) are or will be connected with each other in a manner that the planes of their connections essentially coincide.

15. Fitting according to one of the prior claims, wherein the housing (3) for the check valve and the housing (35) for the thermostat valve are parts of a common housing, and shaped channels create the connection between the two valves.

16. Fitting according to one of the prior claims, wherein the housing (35) for the thermostat valve and for the outlet (46) are connected by a pipe, a hose, etc.

17. Fitting according to one of the prior claims, wherein the connection between the housings (35, 45, 60) and the counter-element is designed so that the counter-element can be attached in alignment with a rotary position.

## Revendications

1. Robinetterie sanitaire destinée à être installée derrière un élément de panneau comportant au moins un orifice de fixation (29), munie d'un corps (3) pour un robinet à soupape comportant une partie intérieure (11), un raccord d'arrivée (7) d'eau chaude, un raccord d'arrivée (8) d'eau froide, une sortie (12) pour l'eau chaude et une sortie (13) pour l'eau froide, d'un corps séparé (35) pour une vanne thermostatique comportant une partie intérieure (36), une arrivée d'eau chaude reliée à la sortie (12) d'eau chaude, une arrivée d'eau froide reliée à la sortie (13) d'eau froide et une sortie (40) pour l'eau mitigée, et d'un thermostat (38) pouvant être inséré dans la partie intérieure (36) du corps (35), **caractérisée par** un mécanisme de valve (14) pouvant être inséré dans la partie intérieure (11) du corps (3) pour le robinet à soupape, comportant un élément de commande (21) et coupant l'eau chaude et l'eau froide, comportant un contre-élément (28) dont la partie avant peut lui être reliée pour compenser les différentes épaisseurs de paroi du panneau de chaque corps (3, 35, 45, 60). Entre ledit contre-élément et le corps, le bord de l'orifice de fixation (29) est bloqué et le diamètre intérieur de chaque contre-élément est supérieur au diamètre extérieur du mécanisme de valve (14) ou du thermostat (38), si bien que ces derniers peuvent être retirés de la partie intérieure (11, 36) de chaque corps (3, 35) même lorsque la robinetterie est montée.

2. Robinetterie selon la revendication 1 munie d'un dispositif d'écoulement (46), lequel
2.1. peut être relié à la sortie d'eau mitigée (40) de la vanne thermostatique,
2.2. comporte un corps (45) comportant une partie intérieure, dans laquelle
2.2.1 le dispositif d'écoulement (46) est pivotant.

3. Robinetterie selon la revendication 2 dans laquelle le corps du dispositif d'écoulement comporte un régulateur de douche et un raccord de sortie (55) pour un flexible de douche.

4. Robinetterie selon l'une quelconque des revendications précédentes munie d'un support (61) pour une douchette comportant un corps (60) muni d'un passage pour le flexible de douche.

5. Robinetterie selon l'une quelconque des revendications précédentes, dans laquelle les corps (3, 35, 45, 60) sont formés pour une installation sous crépi, en particulier pour une installation au bord d'une baignoire.

6. Robinetterie selon l'une quelconque des revendications précédentes, dans laquelle le support pivotant pour le dispositif d'écoulement (46) et/ou le régulateur de douche peuvent être retirés de la partie intérieure (63) de chaque corps (45, 60), même lorsque la robinetterie est installée.

7. Robinetterie selon l'une quelconque des revendications précédentes, dans laquelle le contre-élément se présente sous la forme d'un manchon et peut être vissé à l'intérieur du corps (3, 60).

8. Robinetterie selon l'une quelconque des revendications précédentes, dans laquelle le contre-élément est annulaire et peut être vissé au moyen de vis (42) sur le corps (35, 45).

9. Robinetterie selon l'une quelconque des revendications précédentes, dans laquelle les raccords d'arrivée d'eau (7, 8) et les sorties (12, 13) du corps du dispositif de fermeture de l'eau (3) se situent essentiellement dans un même plan.

10. Robinetterie selon la revendication 9, dans laquelle l'axe central de l'orifice de fixation (29) se situe essentiellement dans le plan des raccords (7, 8, 12, 13).

11. Robinetterie selon l'une quelconque des revendications précédentes, dans laquelle les entrées et la sortie (40) du corps (35) pour le thermostat se situent essentiellement dans un seul plan.

12. Robinetterie selon la revendication 11, dans laquelle l'axe central de l'orifice de fixation (29) se situe essentiellement dans le plan des raccords (40).

13. Robinetterie selon l'une quelconque des revendications précédentes, dans laquelle l'arrivée (49) dans le corps (45) du dispositif d'écoulement (46) et son raccord de flexible de douche (55) se situent essentiellement dans le même plan, dans lequel se trouve de préférence également l'axe central (52) de l'orifice de fixation (29).

14. Robinetterie selon l'une quelconque des revendications précédentes, dans laquelle au moins deux corps (3, 45, 35, 60) sont ou / seront / reliés les uns aux autres de telle manière que les plans de leurs raccords coïncident pour l'essentiel.

15. Robinetterie selon l'une quelconque des revendications précédentes dans laquelle le corps (3) pour le robinet à soupape et le corps (35) pour la vanne thermostatique constituent des pièces d'un même corps et dans laquelle la liaison entre les deux soupapes est réalisée par le biais de conduits moulés.

16. Robinetterie selon l'une quelconque des revendications précédentes, dans laquelle le corps (35) pour la vanne thermostatique et le corps pour le dispositif d'écoulement (46) sont reliés l'un à l'autre par un tube, un flexible ou tout autre dispositif de ce type.

17. Robinetterie selon l'une quelconque des revendications précédentes, dans laquelle la liaison entre les corps (35, 45, 60) et le contre-élément est formée de telle manière que le contre-élément peut être posé en rotation.
